# EUROPÄISCHE PATENTSCHRIFT

(11) **EP 2 978 947 B1**
(45) Veröffentlichungstag und Bekanntmachung des Hinweises auf die Patenterteilung: **06.12.2017**
(21) Anmeldenummer: 14713445.6
(22) Anmeldetag: 26.03.2014
(51) Int. Cl.: F16K 49/00, F16K 1/32, F16K 31/06, F01N 3/20

(54) **VORRICHTUNG ZUM ZUMESSEN VON FLUID**
DEVICE FOR METERING FLUID
DISPOSITIF DE DOSAGE DE FLUIDE

(30) Priorität: 26.03.2013 DE 102013205309
(43) Veröffentlichungstag der Anmeldung: 03.02.2016
(73) Patentinhaber: Robert Bosch GmbH, 70442 Stuttgart (DE)
(72) Erfinder: SEITZ, Ansgar, 73765 Neuhausen (DE); THOEMMES, Franz, 74321 Bietigheim-Bissingen (DE); ETZEL, Dieter, 71735 Eberdingen (DE)
(86) Internationale Anmeldenummer: PCT/EP2014/056085
(87) Internationale Veröffentlichungsnummer: WO 2014/154763

(56) Entgegenhaltungen:
- DE-A1-102010 030 920
- DE-A1-102011 075 381
- DE-A1-102011 078 504

## Beschreibung

### Stand der Technik

Die Erfindung geht aus von einem Vorrichtung zum Zumessen von Fluid, insbesondere zum dosierten Einspritzen eines Reduktionsmittels, wie einer Harnstoff-Wasser-Lösung, in den Abgastrakt einer Brennkraftmaschine nach dem Oberbegriff des Anspruchs 1.

Bei einer bekannten Vorrichtung mit Dosier- oder Zumessventil und Kühlmodul (DE 10 2010 030 920 A1) weist das Kühlmodul eine im Durchmesser mehrfach gestufte Hülse auf, auf deren einem Hülsenabschnitt ein Ringkanal mit einem Zu- und Abfluss für ein den Ringkanal durchströmendes Kühlmittel, vorzugsweise Wasser, angeordnet ist. Das Dosier- oder Zumessventil besitzt ein rohrförmiges Ventilgehäuse, das endseitig mit einem Ventilsitzkörper abgeschlossen ist. Der Ventilsitzkörper enthält eine Spritz- oder Zumessöffnung und einen diesen umschließenden Ventilsitz, der mit einem elektromagnetisch betätigten und von einer Ventilschließfeder beaufschlagten Ventilglied zum Freigeben und Schließen der Ventilöffnung zusammenwirkt. Ein Magnetgehäuse des Elektromagneten ist mit einem durchmesserkleineren Gehäuseabschnitt auf dem Ventilgehäuse festgelegt und nimmt in einem durchmessergrößeren Abschnitt eine auf dem Ventilgehäuse sitzende Magnetspule auf. Der durchmessergrößere Abschnitt des Magnetgehäuses ist in einem von dem durchmesserkleineren Abschnitt abgekehrten Bereich von einer durch Umspritzen eines zulaufseitigen Gehäuseabschnitts des Ventilgehäuses hergestellten Kunststoffummantelung übergriffen. Das Dosier- oder Zumessventil ist so in die Hülse des Kühlmoduls eingesetzt, dass das zumessseitige Ende des Ventilgehäuses in einen Hülsenabschnitt mit dem kleinsten Innendurchmesser eintaucht und der Hülseabschnitt mit dem größten Innendurchmesser die Kunststoffummantelung übergreift. Zum Abdichten des Innenraums der Hülse ist zwischen der Kunststoffummantelung und dem durchmessergrößten Hülsenabschnitt ein Dichtungsring aus einem Elastomer eingelegt und der durchmesserkleinste Hülsenabschnitt an dem über den Ventilsitzkörper überstehenden Ende des Ventilgehäuses mit dem Ventilgehäuse verschweißt.

Aus der DE 10 2011 078 504 A1 ist ein kühlbares Dosiermodul mit einem elektrisch steuerbaren Zumessventil mit einem von einem Kühlmittel beaufschlagen Kühlmodul zum Kühlen des Zumessventils bekannt.

Aus der DE 10 2011 075 381 A1 ist ebenfalls ein kühlbares Dosiermodul mit einem elektrisch steuerbaren Zumessventil mit einem von einem Kühlmittel beaufschlagten Kühlmodul zum Kühlen des Zumessventils bekannt, wobei das Kühlmodul von einem Hitzeschild umschlossen ist.

### Offenbarung der Erfindung

Die Vorrichtung zum Zumessen von Fluid hat den Vorteil, dass infolge intensiver, ganzheitlicher Kühlung des Zumessventils das Zumessventil hohe Temperaturen des Fluids, z.B. 110°C, und der Umgebung, z.B. 200°C, unbeschadet verträgt und vollständig gegen Eindringen von Spritzwasser geschützt ist und damit die Anforderung an seine Watfähigkeit oder Tauchsicherheit erfüllt, die bei der bekannten Dosiervorrichtung so nicht gegeben ist. Gegenüber der bekannten Dosiervorrichtung entfallen die kostenintensive Kunststoffumspritzung des Ventilgehäuses zur Herstellung der Kunststoffummantelung und es kann auf jegliche Elastomerdichtungen zwischen Zumessventil und Kühlmodul verzichtet werden. Damit werden Fertigungskosten gesenkt und auch Undichtigkeitsprobleme vermieden, die durch Alterung von Elastomerdichtungen bei hohen Temperaturen und unter Einwirkung von aggressivem Fluid, wie z. B. einer Harnstoff- Wasser- Lösung, auftreten.

Das Kühlmodul weist ein Modulgehäuse mit einem die Zulauföffnung des Ventilgehäuses freigebenden Gehäuseeingang und einem die Zumessöffnung des Ventilgehäuses freigebenden Gehäuseausgang sowie einen zwischen Gehäuseeingang und Gehäuseausgang des Modulgehäuses sich erstreckenden Kühlmantel mit einem Zu- und Abfluss für das Kühlmittel auf. Durch den damit sich nahezu über das gesamte Ventilgehäuse erstreckenden Kühlmantel des Kühlmoduls wird die intensive Kühlung des im Modulgehäuse einliegenden gesamten Zumessventils erreicht und alle Ventilbauteile, insbesondere die elektrischen Bauteile, wie ein elektrischer Aktor zur Ventilsteuerung, vor Überhitzung sowohl durch das das Ventilgehäuse durchströmende Fluid als auch durch die hohen Umgebungstemperaturen am Einbauort, wie im Abgasstrang der Brennkraftmaschine, sehr gut geschützt. Als den Kühlmantel durchströmendes Kühlmittel wird vorzugsweise Wasser eingesetzt.

Das Modulgehäuse weist einen mit dem Kühlmantel versehenen, hohlzylindrischen Gehäusekörper, einen mit dem Gehäusekörper einstückig verbundenen Gehäuseboden und einen den Gehäusekörper abschließenden Gehäusedeckel auf, der mit dem Gehäusekörper stoffschlüssig dicht verbunden ist, z.B. durch eine umlaufende Schweißnaht. Der Gehäuseeingang ist im Gehäusedeckel und der Gehäuseausgang im Gehäuseboden ausgebildet. Das zulaufseitige Gehäuseende des Ventilgehäuses liegt am Gehäusedeckel mit zum Gehäuseeingang kongruenter Zulauföffnung an, und das zumessseitige Gehäuseende des Ventilgehäuses taucht in den Gehäuseausgang im Gehäuseboden des Modulgehäuses ein. Das Ventilgehäuse ist mit dem Gehäusedeckel und dem Gehäuseboden des Modulgehäuses jeweils stoffschlüssig dicht verbunden, z.B. durch jeweils eine umlaufende Schweißnaht. Durch diese Ausbildung des Modulgehäuses und Anordnung des Ventilgehäuses im Modulgehäuse wird eine einfache Montage erzielt, wobei die stoffschlüssige Verbindungen zwischen Modulgehäuse und Ventilgehäuse einen absolut dichten hermetischen Einschluss des Ventilgehäuses sicherstellen, so dass kein Spritzwasser oder Wasser in das das Zumessventil enthaltende Modulgehäuse eindringen kann. Die Vorrichtung ist damit unabhängig von ihrer Einbaulage wat- und tauchfähig.

Erfindungsgemäß weist der Gehäuseboden eine sich zum Gehäuseausgang verjüngende Konusform mit einem angeformten, den Gehäuseausgang umschließenden Bodenbund und der Gehäusedeckel Haubenform mit einem den Gehäuseeingang enthaltenden Haubenboden und einem Haubenmantel auf, wobei die stoffschlüssigen Verbindungen von Ventilgehäuse und Modulgehäuse am Bodenbund und am Haubenboden jeweils umlaufend vorgenommen sind. In Verbindung mit der Anordnung von Zu- und Abfluss für das Kühlmittel am Kühlmantel nahe dem Gehäusedeckel des Modulgehäuses wird eine für den Einbau, z.B. im Abgastrakt einer Brennkraftmaschine, günstige Einbauform der Vorrichtung erzielt.

Durch die in den weiteren Ansprüchen aufgeführten Maßnahmen sind vorteilhafte Weiterbildungen und Verbesserungen der im Anspruch 1 angegebenen Vorrichtung möglich.

Gemäß einer vorteilhaften Ausführungsform der Erfindung ist zumindest das zumessseitige Gehäuseende des Ventilgehäuses als Ventilrohr ausgebildet, das mit einem die Ventilöffnung enthaltenden Ventilsitzkörper abgeschlossen ist. Der Ventilsitzkörper ist stoffschlüssig mit dem Ventilgehäuse verbunden, und die umlaufende, stoffschlüssige Verbindung von Ventilgehäuse und dem am Gehäuseboden des Modulgehäuses angeformten Bodenbund ist in Fluidströmungsrichtung stromabwärts der stoffschlüssigen Verbindung von Ventilsitzkörper und Ventilrohr vorgenommen. Dies hat den Vorteil, dass die Herstellung der stoffschlüssigen Verbindung zwischen Bodenbund und Ventilgehäuse keine schädliche Rückwirkung auf die Ventilfunktion hat.

Gemäß einer vorteilhaften Ausführungsform der Erfindung ist das Ventilgehäuse mittels eines Stützkörpers radial am Modulgehäuse abgestützt. Dies erhöht die Schüttelfestigkeit und Robustheit der Vorrichtung und macht sie geeignet auch für den Einsatz mit rauer Betriebsweise.

Gemäß einer vorteilhaften Ausführungsform der Erfindung ist der Stützkörper aus einem gut wärmeleitenden Material hergestellt. Dadurch wird die vom Fluid auf das Zumessventil übertragene Wärme sehr schnell zum Kühlmantel abgeleitet und das Zumessventil zuverlässig vor Überhitzung geschützt.

Gemäß einer vorteilhaften Ausführungsform der Erfindung weist das Zumessventil einen elektrischen Aktor zum Betätigen eines die Zumessöffnung steuernden Ventilglieds und ein vom Aktor wegführendes, elektrisches Anschlusskabel auf, das über eine im Gehäusedeckel des Modulgehäuses angeordnete, dichte Kabeldurchführung aus dem Modulgehäuse herausgeführt ist. Die Kabeldurchführung wird dabei vorzugsweise mittels einer auf das Anschlusskabel mit Presssitz aufgeschobenen Tülle hergestellt, die in eine im Gehäusedeckel ausgebildete Wandöffnung eingepresst ist. Dies hat den Vorteil, dass die Steckverbindung, die das Anschlusskabel mit einer elektrischen Zuleitung verbindet, weg von der Vorrichtung in Bereiche mit kühlerer Umgebungstemperatur verlegt werden kann. Der aus gut wärmeleitendem Material bestehende Stützkörper auf dem Ventilgehäuse ist vorteilhaft im Bereich des elektrischen Aktors angeordnet, da dadurch die elektrischen Bauelemente des Aktors besonders gut gekühlt werden.

### Kurze Beschreibung der Zeichnungen

Die Erfindung ist anhand eines in den Zeichnungen dargestellten Ausführungsbeispiels in der nachfolgenden Beschreibung näher erläutert. Es zeigen:
Figur 1 eine Seitenansicht einer Vorrichtung zum Zumessen von Fluid mit einem Zumessventil und einem im Längsschnitt dargestellten Kühlmodul,
Figur 2 ausschnittweise einen Längsschnitt des Zumessventils in Figur 1.

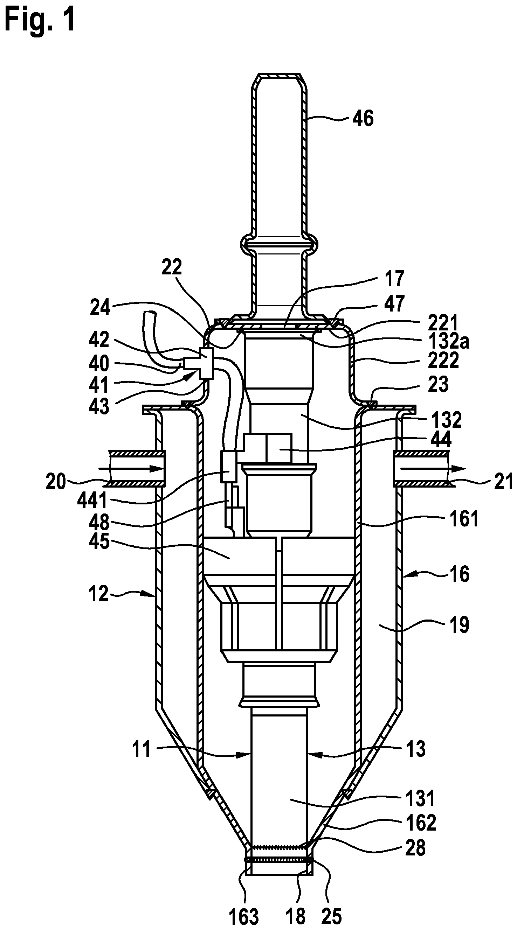

Die in Figur 1 dargestellte Vorrichtung zum Zumessen von Fluid wird vorzugsweise zum dosierten Einspritzen eines Reduktionsmittels, z. B. einer Harnstoff-Wasser-Lösung, in den Abgastrakt einer Brennkraftmaschine zwecks Reduzierung der Stickoxide im Abgas eingesetzt. Die Vorrichtung weist ein elektrisch steuerbares Zumessventil 11 und ein von einem Kühlmittel, vorzugsweise Wasser, beaufschlagtes Kühlmodul 12 zum Kühlen des Zumessventils 11 auf.

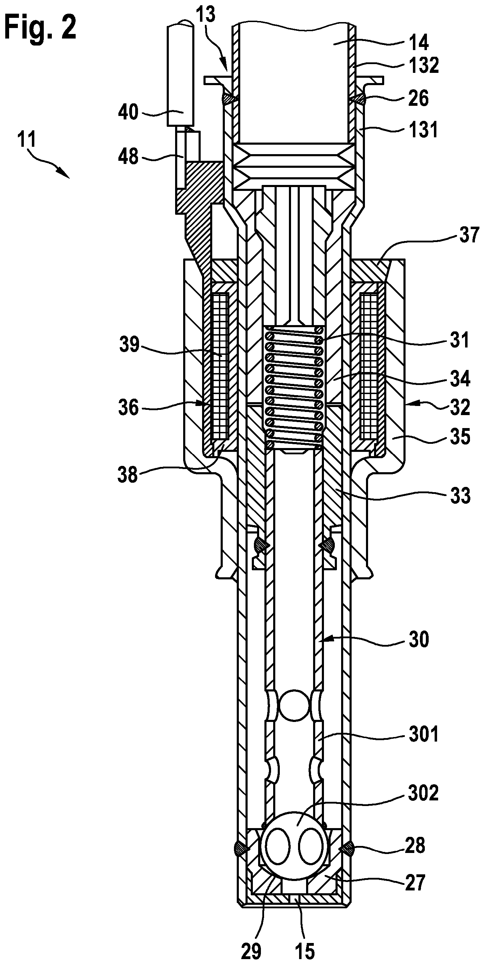

Das in Figur1 in Seitenansicht und in Figur 2 im Längsschnitt dargestellte Zumessventil 11 weist ein Ventilgehäuse 13 mit einer Zulauföffnung 14 und einer Zumessöffnung 15 für das Fluid (Figur 2) auf und ist im Kühlmodul 12 hermetisch eingeschlossen, wobei nur Zulauföffnung 14 und Zumessöffnung 15 des Ventilgehäuses 13 nach außen hin frei sind. Hierzu weist das Kühlmodul 12 ein Modulgehäuse 16 mit einem die Zulauföffnung 14 des Ventilgehäuses 13 freigebenden Gehäuseeingang 17 und einem die Zumessöffnung 15 des Ventilgehäuses 13 freigebenden Gehäuseausgang 18 sowie einen zwischen Gehäuseeingang 17 und Gehäuseausgang 18 sich erstreckenden Kühlmantel 19 mit einem Zufluss 20 und einem Abfluss 21 für das Kühlmittel auf. Das Modulgehäuse 16 ist zweiteilig ausgebildet und ist aus einem mit dem Kühlmantel 19 versehenen, hohlzylindrischen Gehäusekörper 161, der von einem mit dem Gehäusekörper 161 einstückigen Gehäuseboden 162 abgeschlossen ist, und einem Gehäusedeckel 22 zusammengesetzt, der die vom Gehäuseboden 162 abgekehrte Stirnseite des Gehäusekörpers 161 abdeckt und mit dem Gehäusekörper 161 durch Stoffschluss dicht verbunden ist. Die stoffschlüssige Verbindung ist z.B. durch eine am Gehäusedeckel 22 umlaufende Schweißnaht 23 hergestellt. Der Gehäuseeingang 17 ist im Gehäusedeckel 22 und der Gehäuseausgang 18 im Gehäuseboden 162 ausgebildet. Zu- und Abfluss 20, 21 im Kühlmantel19 liegen nahe dem Gehäusedeckel 22.

Das Ventilgehäuse 13 liegt mit seinem zulaufseitigen Gehäuseende am Gehäusedeckel 22 des Modulgehäuses 16 mit zu dessen Gehäuseeingang 17 kongruenter Zulauföffnung 14 an und taucht mit seinem zumessseitigen Gehäuseende in den im Gehäuseboden 162 des Modulgehäuses 16 angeordneten Gehäuseausgang 18 ein. Das Ventilgehäuse 13 ist mit dem Gehäusedeckel 22 und dem Gehäuseboden 162 jeweils stoffschlüssig verbunden. Die z.B. durch Schweißen entstehenden, umlaufenden Schweißnähte 24 und 25 ergeben jeweils eine dichte Verbindung zwischen Ventilgehäuse 13 und Modulgehäuse 16. Der Gehäuseboden 162 weist eine sich zum Gehäuseausgang 18 verjüngende Konusform mit einem angeformten, den Gehäuseausgang 18 umschließenden Bodenbund 163 auf, während der Gehäusedeckel 22 Haubenform mit einem den Gehäuseeingang 17 enthaltenden Haubenboden 221 und einen mit dem hohlzylindrischen Gehäusekörper 161 fluchtenden Haubenmantel 222 aufweist, so dass die stoffschlüssige Verbindung des Modulgehäuses 16 zum Ventilgehäuse 13 am Gehäusedeckel 22 (Schweißnaht 24) im Haubenboden 221 und am Gehäuseboden 162 (Schweißnaht 25) im Bodenbund 163 liegt.

Bei dem hier gezeigten Zumessventil 11 ist das Ventilgehäuse 13, wie dies aus der Schnittdarstellung gemäß Figur 2 zu sehen ist, aus einem Ventilrohr 131 und einer in das Ventilrohr 131 eingesetzten Hülse 132 zusammengesetzt, die mit dem Ventilrohr 131 stoffschlüssig, z.B. durch eine umlaufende Schweißnaht 26, verbunden ist. Die Hülse 132 weist die Zulauföffnung 14 des Ventilgehäuses 13 auf, die von einem Hülsenflansch 132a (Figur 1) umgeben ist, und bildet das zulaufseitige Gehäuseende. Das von dem Ventilrohr 131 gebildete zumessseitige Gehäuseende des Ventilgehäuses 13 ist mit einem Ventilsitzkörper 27 abgeschlossen, der mit dem Ventilgehäuse 13 respektive dem Ventilrohr 131 stoffschlüssig, z.B. über eine umlaufende Schweißnaht 28, fluiddicht verbunden ist. Im Ventilsitzkörper 27 ist die Zumessöffnung 15 ausgebildet, die von einem Ventilsitz 29 umschlossen ist. Zum Schließen und Freigeben der Zumessöffnung 15 wirkt ein Ventilglied 30 mit dem Ventilsitz 29 zusammen. Das Ventilglied 30 besitzt eine hohlzylindrische Ventilnadel 301 und einen die Ventilnadel 301 abschließenden Schließkopf 302, der mittels einer an der Ventilnadel 301 angreifenden Ventilschließfeder 31 auf den Ventilsitz 29 aufgedrückt wird. Zum Betätigen des Ventilglieds 30 gegen die Rückstellkraft der Ventilschließfeder 31 dient ein hier als Elektromagnet 32 ausgebildeter elektrischer Aktor. Der Elektromagnet 32 umfasst in bekannter Weise einen mit der Ventilnadel 301 verbundenen, im Ventilrohr 131 axial verschieblich geführten Mangetanker 33 der mit einem im Ventilrohr 131 festgelegten Magnetkern 34 einen Arbeitsluftspalt einschließt, eine auf dem Ventilrohr 131 aufsitzende Magnetspule 36, einen die Magnetspule 36 aufnehmenden Magnettopf 35, der mit einem durchmesserkleineren Topfabschnitt auf dem Ventilrohr 131 befestigt ist, und ein einen magnetischen Rückschluss herstellendes Magnetjoch 37. Die Magnetspule 36 weist eine auf einen Spulenkörper 38 aufgewickelte Magnet- oder Erregerwicklung 39 auf, die mit einem elektrischen Anschlusskabel 40 verbunden ist. Die elektrische und mechanische Verbindung ist an einer außerhalb des Magnettopfs 35 liegenden Verbindungsstelle 48 durch Löten, Schweißen oder Crimpen vorgenommen. Wie aus Figur 1 ersichtlich ist, tritt das Anschlusskabel 40 über eine im Gehäusedeckel 23 angeordnete, dichte Kabeldurchführung 41 aus dem Modulgehäuse 16 aus, wobei die Kabeldurchführung 41 beispielsweise eine auf das Anschlusskabel 40 mit Presssitz aufgeschobene Tülle 42 aus Elastomer aufweist, die in eine im Haubenmantel 222 vorhandene Wandöffnung 43 eingesetzt ist.

Zur Erzielung einer ausreichenden Rüttelfestigkeit der Vorrichtung ist das Anschlusskabel 40 in einem Kabelabschnitt zwischen der Verbindungsstelle 48 und der Kabeldurchführung 41 durch einen Kabelhalter 44 am Ventilgehäuse 13 radial abgestützt. Der Kabelhalter 44 ist z.B. als Clip ausgebildet, der auf die Hülse 132 des Ventilgehäuses 13 aufgesteckt ist. Der Clip ist mit einer einstückig ausgebildeten Muffe 441 an das Anschlusskabel 40 angespritzt. Außerdem ist das Ventilgehäuse 13 mittels eines Stützkörpers 45 radial am Modulgehäuse 16 respektive am hohlzylindrischen Gehäusekörper 161 radial abgestützt. Vorzugsweise ist der Stützkörper 45 auf den am Ventilgehäuse 13 respektive dem Ventilrohr 131 festgelegten Magnettopf 35 aufgeklemmt. Zur Erzielung einer schnellen Wärmeableitung aus dem durch das heiße Fluid erwärmten Zumessventil 13, insbesondere von dessen elektrischen Bauteilen, besteht vorzugsweise der Stützkörper 45 aus einem sehr gut wärmeleitenden Material.

Zum Anschließen der Vorrichtung an eine Fluidzuführleitung ist auf den Gehäusedeckel 22 des Modulgehäuses 16 ein den Gehäuseeingang 17 des Modulgehäuses 16 umschließender Anschlussstutzen 46 aufgesetzt und im Bereich des Haubenbodens 221 stoffschlüssig mit dem Gehäusedeckel 22, z.B. über eine umlaufende Schweißnaht 47, verbunden.

Die Montage der Vorrichtung erfolgt wie folgt:
Das komplett vormontierte Zumessventil 11 wird zunächst mit dem Gehäusedeckel 22 des Modulgehäuses 16 versehen, indem der haubenförmige Gehäusedeckel 22 mit seinem Haubenboden 161 auf die Hülse 132 des Ventilgehäuses 13 aufgesetzt und Hülsenflansch 132a und Haubenboden 221 stoffschlüssig miteinander verbunden werden (Schweißnaht 24), wobei die Zulauföffnung 14 im Ventilgehäuse 13 und der Gehäuseeingang 17 im Haubenboden 221 zueinander deckungsgleich sind. Das Anschlusskabel 40 mit aufgeschobener Tülle 42 wird mit den Anschlusssenden der Magnetspule 36 z.B. verlötet (Verbindungsstelle 48 in Figur 2) und die Tülle 42 in die Wandöffnung 43 im Haubenmantel 222 eingesetzt (Figur 1). Bei optional vorhandenem Kabelhalter 44 wird dieser auf die Hülse 132 des Ventilgehäuses 13 aufgeclipst. Auf den Haubenboden 221 des Gehäusedeckels 22 wird der Anschlussstutzen 46 koaxial zur Hülse 132 so aufgesetzt, dass der Gehäuseeingang 17 im Haubenboden 221 überdeckt ist, und die stoffschlüssige Verbindung zwischen Anschlussstutzen 46 und Haubenboden 221 wird hergestellt (Schweißnaht 47). Bei optional vorhandenem Stützkörper 45 wird dieser auf den Magnettopf 35 aufgeklemmt. Das so bestückte Zumessventil 11 wird in den den Kühlmantel 19 tragenden, hohlzylindrischen Gehäusekörper 161 des Modulgehäuses 16 axial eingeführt bis der Haubenmantel 222 des Gehäusedeckels 22 an dem Gehäusekörper 161 anschlägt und das zumessseitige Gehäuseende des Zumessventils 11 in den am Gehäuseboden 162 des Modulgehäuses 16 angeformten Bodenbund 163 eingetaucht ist. Nunmehr wird die stoffschlüssige Verbindung zwischen dem Haubenmantel 222 und dem hohlzylindrischen Gehäusekörper 161 (Schweißnaht 23) einerseits und zwischen dem Ventilrohr 131 des Ventilgehäuses 11 und dem Bodenbund 163 am Gehäuseboden 162 des Modulgehäuses 16 (Schweißnaht 25) andererseits hergestellt. Um bei der Herstellung der stoffschlüssigen Verbindung von Ventilgehäuse 13 und Bodenbund 163 (Schweißnaht 25 in Figur 1) die Ventilfunktion nicht zu beeinträchtigen, wird diese in Fluidströmungsrichtung gesehen stromabwärts der stoffschlüssigen Verbindung von Ventilgehäuse 13 respektive Ventilrohr 131 und Ventilsitzkörper 27 (Schweißnaht 28 in Figur 1 und 2) vorgenommen.

Mit dem Anbringen der stoffschlüssigen Verbindung von Ventilgehäuse 13 und Bodenbund 163 des Modulgehäuses 16 über die Schweißnaht 25 soll eine hermetisch dichte Einheit gebildet werden. Da es sich sowohl bei dem Gehäusekörper 161 des Modulgehäuses 16 als auch bei dem Ventilrohr 131 um Tiefziehteile handelt, sind diese mit relativ großen Durchmessertoleranzen behaftet, so dass das mögliche Spiel zwischen den beiden Teilen Ventilrohr 131 und dem Gehäusekörper 161 zu groß sein kann, um die gewünschte Dichtschweißung mit der Schweißnaht 25 zu garantieren. Deshalb wird erfindungsgemäß das Zumessventil 11 zuerst in dem Gehäusekörper 161 des Kühlmoduls 12 montiert. Danach wird das mögliche Spiel zwischen beiden Bauteilen, entstanden durch zu große Durchmesserabweichungen, überprüft. Liegen die Durchmesserabweichungen und damit das vorhandene Spiel zwischen dem Ventilrohr 131 und dem Gehäusekörper 161 über einem definierten Grenzwert, so erfolgt an der stromabwärtigen Ventilspitze des Zumessventils 11 mittels eines nicht gezeigten Kalibrierwerkzeugs eine Aufweitung des Ventilrohres 131 von innen, wodurch der Schweißspalt auf ein gewünschtes Minimum reduziert wird. Im Aufweitungsvorgang passt sich das Ventilrohr 131 des Zumessventils 11 optimal an den bestehenden Durchmesser des Bodenbunds 163 des Modulgehäuses 16 an. Auf diese Weise ist sichergestellt, dass die hermetische Dichtschweißung zuverlässig erfolgen kann. Jegliche weitere aufwändige Nacharbeits- und Paarungskosten, die ansonsten bei zu großen Durchmesserabweichungen von Ventilrohr 131 und Modulgehäuse 16 entstehen würden, werden somit in vorteilhafter Weise vermieden.

## Patentansprüche

1. Vorrichtung zum Zumessen von Fluid, insbesondere zum dosierten Einspritzen eines Reduktionsmittels in den Abgastrakt einer Brennkraftmaschine, mit einem elektrisch steuerbaren Zumessventil (11), das ein Ventilgehäuse (13) mit einer Zulauf- und einer Zumessöffnung (14, 15) für das Fluid aufweist, und mit einem von einem Kühlmittel beaufschlagten Kühlmodul (12) zum Kühlen des Zumessventils (11), wobei das Zumessventil (11) im Kühlmodul (12) hermetisch eingeschlossen ist und nur Zulauf- und Zumessöffnung (14, 15) des Ventilgehäuses (13) freiliegen, wobei das Kühlmodul (12) ein Modulgehäuse (16) mit einem die Zulauföffnung (14) des Ventilgehäuses (13) freigebenden Gehäuseeingang (17) und einem die Zumessöffnung (15) des Ventilgehäuses (13) freigebenden Gehäuseausgang (18) sowie einen zwischen Gehäuseeingang (17) und Gehäuseausgang (18) sich erstreckenden Kühlmantel (19) mit einem Zu- und Abfluss (20, 21) für das Kühlmittel aufweist, wobei das Modulgehäuse (16) einen mit dem Kühlmantel (19) versehenen hohlzylindrischen Gehäusekörper (161), einen mit dem Gehäusekörper (161) einstückigen Gehäuseboden (162) und einen den Gehäusekörper (161) abschließenden Gehäusedeckel (22) aufweist, der mit dem Gehäusekörper (161) stoffschlüssig verbunden ist, dass der Gehäuseeingang (17) im Gehäusedeckel (22) und der Gehäuseausgang (18) im Gehäuseboden (162) angeordnet ist und dass das zulaufseitige Gehäuseende des Ventilgehäuses (13) am Gehäusedeckel (22) mit zum Gehäuseeingang (17) kongruenter Zulauföffnung (14) anliegt und das zumessseitige Gehäuseende des Ventilgehäuses (13) in den Gehäuseausgang (18) im Gehäuseboden (162) des Modulgehäuses (16) eintaucht und dass das Ventilgehäuse (13) mit Gehäusedeckel (22) und Gehäuseboden (162) des Modulgehäuses (16) jeweils stoffschlüssig verbunden ist,
**dadurch gekennzeichnet, dass** der Gehäuseboden (162) des Modulgehäuses (16) eine zum Gehäuseausgang (18) sich verjüngende Konusform mit einem angeformten, den Gehäuseausgang (18) umschließenden Bodenbund (163) und der Gehäusedeckel (22) Haubenform mit einem den Gehäuseeingang (17) des Modulgehäuses (16) enthaltenden Haubenboden (221) und einem Haubenmantel (222) aufweist und die stoffschlüssige Verbindung von Ventilgehäuse (13) und Modulgehäuse (16) am Bodenbund (163) und am Haubenboden (221) jeweils umlaufend vorgenommen ist.

2. Vorrichtung nach Anspruch 1, **dadurch gekennzeichnet, dass** zumindest das zumessseitige Gehäuseende des Ventilgehäuses (13) als Ventilrohr (131) ausgebildet ist, das mit einem die Zumessöffnung (15) enthaltenden Ventilsitzkörper (27) abgeschlossen und mit dem Ventilsitzkörper (27) stoffschlüssig verbunden ist, und dass die umlaufende, stoffschlüssige Verbindung von Ventilgehäuse (13) und dem am Gehäuseboden (162) des Modulgehäuses (16) angeformten Bodenbund (163) in Fluidströmungsrichtung stromabwärts der stoffschlüssigen Verbindung von Ventilsitzkörper (27) und Ventilgehäuse (13) liegt.

3. Vorrichtung nach einem der Ansprüche 1 oder 2, **dadurch gekennzeichnet, dass** das zulaufseitige Gehäuseende des Ventilgehäuses (13) als eine die Zulauföffnung (14) aufweisende Hülse (132) mit einem die Zulauföffnung (14) umgebenden Hülsenflansch (132a) ausgebildet ist, an dem die umlaufende, stoffschlüssige Verbindung mit dem Gehäusedeckel (22) vorgenommen ist.

4. Vorrichtung nach einem der Ansprüche 1 bis 3, **dadurch gekennzeichnet, dass** das Ventilgehäuse (13) mittels eines Stützkörpers (45) radial im Modulgehäuse (16) abgestützt ist.

5. Vorrichtung nach Anspruch 4, **dadurch gekennzeichnet, dass** der Stützkörper (45) aus einem gut wärmeleitenden Material besteht.

6. Vorrichtung nach einem der Ansprüche 1 bis 5, **dadurch gekennzeichnet, dass** das Zumessventil (11) einen elektrischen Aktor zum Betätigen eines die Zumessöffnung (15) steuernden Ventilglieds (30) und ein vom Aktor wegführendes, elektrisches Anschlusskabel (40) aufweist und dass das Anschlusskabel (40) über eine im Gehäusedeckel (22) des Modulgehäuses (16) angeordnete, dichte Kabeldurchführung (41) aus dem Modulgehäuse (16) herausgeführt ist.

7. Vorrichtung nach Anspruch 6, **dadurch gekennzeichnet, dass** die Kabeldurchführung (41) eine auf das Anschlusskabel (40) mit Presssitz aufgeschobene Tülle (42) aus einem Elastomer aufweist, die in eine im Haubenmantel (222) des Gehäusedeckels (22) ausgebildete Wandöffnung (43) eingesetzt ist.

8. Vorrichtung nach Anspruch 6 oder 7, **dadurch gekennzeichnet, dass** das Anschlusskabel (40) in einem auf dem Ventilgehäuse (13) aufgesetzten, vorzugsweise aufgeklippsten Kabelhalter (44) abgestützt ist.

9. Vorrichtung nach einem der Ansprüche 6 bis 8, **dadurch gekennzeichnet, dass** der elektrische Aktor ein Elektromagnet (32) mit einem auf dem Ventilgehäuse (13) festgelegten Magnettopf (35) und einer im Magnettopf (35) aufgenommenen Magnetspule (36) ist, die mit dem Anschlusskabel (40) verbunden ist, und dass der Stützkörper (45) auf dem Magnettopf (35) angeordnet, vorzugsweise aufgeklemmt, ist.

10. Vorrichtung nach einem der Ansprüche 1 bis 9, **dadurch gekennzeichnet, dass** auf dem Gehäusedeckel (22) ein den Gehäuseeingang (17) umschließender Anschlussstuten (46) aufgesetzt und mit dem Gehäusedeckel (22) stoffschlüssig verbunden ist.

## Claims

1. Device for the metering of fluid, in particular for the dosed injection of a reducing agent into the exhaust tract of an internal combustion engine, having an electrically controllable metering valve (11) which has a valve housing (13) with an inflow and a metering opening (14, 15) for the fluid, and having a cooling module (12) which can be charged with a cooling medium and which serves for cooling the metering valve (11), wherein the metering valve (11) is hermetically enclosed in the cooling module (12) and only the inflow and metering openings (14, 15) of the valve housing (13) are exposed, wherein the cooling module (12) has a module housing (16) with a housing inlet (17), which opens up the inflow opening (14) of the valve housing (13), and with a housing outlet (18), which opens up the metering opening (15) of the valve housing (13), and with a cooling jacket (19) which extends between housing inlet (17) and housing outlet (18) and which has an inflow and an outflow (20, 21) for the coolant, wherein the module housing (16) has a hollow cylindrical housing body (161) equipped with the cooling jacket (19), has a housing base (162) formed in one piece with the housing body (161), and has a housing cover (22) which closes off the housing body (161) and which is cohesively connected to the housing body (161), that the housing inlet (17) is arranged in the housing cover (22) and the housing outlet (18) is arranged in the housing base (162), and that the inflow-side housing end of the valve housing (13) bears against the housing cover (22) with an inflow opening (14) congruent with respect to the housing inlet (17), and the metering-side housing end of the valve housing (13) protrudes into the housing outlet (18) in the housing base (162) of the module housing (16), and that the valve housing (13) is in each case cohesively connected to housing cover (22) and housing base (162) of the module housing (16),
**characterized in that** the housing base (162) of the module housing (16) has a conical shape which narrows towards the housing outlet (18) and which has an integrally formed base collar (163) surrounding the housing outlet (18), and the housing cover (22) has a cap-like form with a cap base (221) comprising the housing inlet (17) of the module housing (16) and with a cap shell (222), and the cohesive connection of valve housing (13) and module housing (16) is performed, in each case in encircling fashion, on the base collar (163) and on the cap base (221).

2. Device according to Claim 1, **characterized in that** at least the metering-side housing end of the valve housing (13) is formed as a valve tube (131) which is closed off by means of a valve seat body (27) comprising the metering opening (15) and which is cohesively connected to the valve seat body (27), and **in that** the encircling cohesive connection of valve housing (13) and the base collar (163) integrally formed on the housing base (162) of the module housing (16) is situated downstream, in the fluid flow direction, of the cohesive connection of valve seat body (27) and valve housing (13).

3. Device according to either of Claims 1 and 2, **characterized in that** the inflow-side housing end of the valve housing (13) is formed as a sleeve (132) which has the inflow opening (14) and which has a sleeve flange (132a) surrounding the inflow opening (14), on which sleeve flange (132a) the encircling, cohesive connection to the housing cover (22) is performed.

4. Device according to one of Claims 1 to 3, **characterized in that** the valve housing (13) is supported radially in the module housing (16) by means of a support body (45).

5. Device according to Claim 4, **characterized in that** the support body (45) is composed of a material with good thermal conductivity.

6. Device according to one of Claims 1 to 5, **characterized in that** the metering valve (11) is an electrical actuator for the actuation of a valve element (30) which controls the metering opening (15), and said metering valve has an electrical connection cable (40) leading away from the actuator, and **in that** the connection cable (40) is led out of the module housing (16) via a sealed cable leadthrough (41) arranged in the housing cover (22) of the module housing (16).

7. Device according to Claim 6, **characterized in that** the cable leadthrough (41) has a grommet (42) which is composed of an elastomer and which is pushed onto the connection cable (40) with an interference fit and which is inserted into a wall opening (43) formed in the cap shell (222) of the housing cover (22).

8. Device according to Claim 6 or 7, **characterized in that** the connection cable (40) is supported in a cable holder (44) which is mounted, preferably clipped, onto the valve housing (13).

9. Device according to one of Claims 6 to 8, **characterized in that** the electrical actuator is an electromagnet (32) with a magnet pot (35) fixed to the valve housing (13) and with a magnet coil (36) received in the magnet pot (35), which magnet coil is connected to the connection cable (40), and **in that** the support body (45) is arranged, preferably clamped, on the magnet pot (35).

10. Device according to one of Claims 1 to 9, **characterized in that** a connection piece (46) which surrounds the housing inlet (17) is mounted on the housing cover (22) and is cohesively connected to the housing cover (22).

## Revendications

1. Dispositif de dosage de fluide, en particulier pour l'injection dosée d'un agent réducteur dans le système d'échappement d'un moteur à combustion interne, comprenant une soupape de dosage (11) commandable électriquement, qui présente un boîtier de soupape (13) avec une ouverture d'alimentation et une ouverture de dosage (14, 15) pour le fluide, et avec un module de refroidissement (12) sollicité par un réfrigérant pour le refroidissement de la soupape de dosage (11), la soupape de dosage (11) étant enfermée hermétiquement dans le module de refroidissement (12) et seulement l'ouverture d'alimentation et l'ouverture de dosage (14, 15) du boîtier de soupape (13) étant exposées, le module de refroidissement (12) présentant un boîtier de module (16) avec une entrée de boîtier (17) libérant l'ouverture d'alimentation (14) du boîtier de soupape (13) et une sortie de boîtier (18) libérant l'ouverture de dosage (15) du boîtier de soupape (13) ainsi qu'une enveloppe de refroidissement (19) s'étendant entre l'entrée de boîtier (17) et la sortie de boîtier (18) avec un afflux et une évacuation (20, 21) pour le réfrigérant, le boîtier de module (16) présentant un corps de boîtier cylindrique creux (161) pourvu de l'enveloppe de refroidissement (19), un fond de boîtier (162) réalisé d'une seule pièce avec le corps de boîtier (161) et un couvercle de boîtier (22) fermant le corps de boîtier (161), qui est raccordé par liaison de matière avec le corps de boîtier (161), que l'entrée de boîtier (17) est disposée dans le couvercle de boîtier (22) et la sortie de boîtier (18) est disposée dans le fond de boîtier (162), et que l'extrémité de boîtier côté alimentation du boîtier de soupape (13) s'applique contre le couvercle de boîtier (22) avec une ouverture d'alimentation (14) coïncidant avec l'ouverture de boîtier (17) et l'extrémité de boîtier côté dosage du boîtier de soupape (13) plongeant dans la sortie de boîtier (18) dans le fond de boîtier (162) du boîtier de module (16) et que le boîtier de soupape (13) est à chaque fois raccordé par liaison de matière avec le couvercle de boîtier (22) et le fond de boîtier (162) du boîtier de module (16),
**caractérisé en ce que** le fond de boîtier (162) du boîtier de module (16) présente une forme conique se rétrécissant vers la sortie de boîtier (18) avec un épaulement de fond (163) façonné, entourant la sortie de boîtier (18), et le couvercle de boîtier (22) présentant une forme en hotte avec un fond de hotte (221) contenant l'entrée de boîtier (17) du boîtier de module (16) et une enveloppe de hotte (222) et le raccordement par liaison de matière du boîtier de soupape (13) et du boîtier de module (16) étant chaque fois effectué sur la périphérie au niveau de l'épaulement de fond (163) et au niveau du fond de hotte (221).

2. Dispositif selon la revendication 1, **caractérisé en ce qu'**au moins l'extrémité de boîtier côté dosage du boîtier de soupape (13) est réalisée sous forme de tube de soupape (131) qui est fermé par un corps de siège de soupape (27) contenant l'ouverture de dosage (15) et qui est raccordé par liaison de matière avec le corps de siège de soupape (27), et **en ce que** le raccordement périphérique par liaison de matière du boîtier de soupape (13) et de l'épaulement de fond (163) façonné au niveau du fond de boîtier (162) du boîtier de module (16) est situé dans la direction d'écoulement de fluide en aval du raccordement par liaison de matière du corps de siège de soupape (27) et du boîtier de soupape (13).

3. Dispositif selon l'une quelconque des revendications 1 ou 2, **caractérisé en ce que** l'extrémité de boîtier côté alimentation du boîtier de soupape (13) est réalisée sous forme de manchon (132) présentant l'ouverture d'alimentation (14) avec une bride de manchon (132a) entourant l'ouverture d'alimentation (14), au niveau de laquelle est effectué le raccordement périphérique par liaison de matière avec le couvercle de boîtier (22).

4. Dispositif selon l'une quelconque des revendications 1 à 3, **caractérisé en ce que** le boîtier de soupape (13) est supporté radialement dans le boîtier de module (16) au moyen d'un corps de support (45).

5. Dispositif selon la revendication 4, **caractérisé en ce que** le corps de support (45) se compose d'un matériau bon conducteur de la chaleur.

6. Dispositif selon l'une quelconque des revendications 1 à 5, **caractérisé en ce que** la soupape de dosage (11) présente un actionneur électrique pour l'actionnement d'un organe de soupape (30) commandant l'ouverture de dosage (15) et un câble de raccordement électrique (40) conduisant à l'écart de l'actionneur, et **en ce que** le câble de raccordement (40) est guidé hors du boîtier de module (16) par le biais d'un passage de câble hermétique (41) disposé dans le couvercle de boîtier (22) du boîtier de module (16).

7. Dispositif selon la revendication 6, **caractérisé en ce que** le passage de câble (41) présente une douille (42) poussée avec ajustement serré sur le câble de raccordement (40), constituée d'un élastomère, qui est insérée dans une ouverture de paroi (43) réalisée dans l'enveloppe de hotte, (222) du couvercle de boîtier (22).

8. Dispositif selon la revendication 6 ou 7, **caractérisé en ce que** le câble de raccordement (40) est supporté dans un support de câble (44) posé sur le boîtier de soupape (13), de préférence encliqueté sur celui-ci.

9. Dispositif selon l'une quelconque des revendications 6 à 8, **caractérisé en ce que** l'actionneur électrique est un électroaimant (32) avec un pot magnétique (35) posé fixement sur le boîtier de soupape (13) et une bobine magnétique (36) reçue dans le pot magnétique (35), qui est raccordée au câble de raccordement (40), et **en ce que** le corps de support (45) est disposé, de préférence serré, sur le pot magnétique (35).

10. Dispositif selon l'une quelconque des revendications 1 à 9, **caractérisé en ce que** la tubulure de raccordement (46) entourant l'entrée de boîtier (17) est posée sur le couvercle de boîtier (22) et est raccordée par liaison de matière avec le couvercle de boîtier (22).
